# EUROPEAN PATENT APPLICATION

(11) **EP 1 892 659 A2**
(43) Date of publication of application: **27.02.2008**
(21) Application number: 07252903.5
(22) Date of filing: 23.07.2007
(51) Int. Cl.: G06Q 10/00

(54) **Model based supportability process planning data set**

(30) Priority: 24.07.2006 US 491892
(71) Applicant: United Technologies Corporation, Hartford, CT 06101 (US)
(72) Inventor: Coulter, Corey Joseph Michael, Simi Valley, CA 93065 (US)
(74) Representative: Leckey, David Herbert

(57) **Abstract**

A common database (12) is used to store data (28,30) relating to both three-dimensional graphics models and logistical management information for a part. A selected customer standard dictates the data input and output from the database (12). The database (12) can be used to create three-dimensional simulations and link text from the logistical management information to the three-dimensional graphics model.

## Description

### BACKGROUND OF THE INVENTION

This invention relates to a method of managing information associated with component parts and assemblies.

Management of inventory and handling of component parts is rather complex. This is particularly true of managing, for example, aerospace parts for the government and other customers since the disassembly, handling and reassembly of the parts can be rather complex. Moreover, accurate inventory and tracking of parts are critical to meeting customer demands.

Typically, there are two completely separate software programs and databases used for producing separate documentation required by the customer. First, a three-dimensional graphics program is used to produce graphics models of the part and/or assembly. The graphics models are used to determine and illustrate various design and assembly features of a particular component or assembly. The graphics model utilizes spatial data relating to the component. Second, a logistical support program is used to produce text documents relating to logistical management information such as, for example, the location of the component, storage parameters, and disassembly, handling and reassembly of the component. Typical logistical support document requirements are called out in government specifications MIL-STD (old standard) and MIL-PREF (new standard). The logistical management information is typically stored and used externally and completely independent of any three-dimensional model and typically within the confines of a MS Access database or an off-the-shelf program built specifically around the particular military standard in use.

Both the graphics model and the logistical management information undergo independent reviews and analyses to determine compliance with customer requirements. The separation between graphics models and logistical management information results in higher long term cost and complexity with the components management process.

### SUMMARY OF THE INVENTION

A common database is used to store data on a computer readable media relating to both three-dimensional graphics model and logistical management information for a part, which together provide a common data set. A selected customer standard, for example MIL-STD or MIL-PREF, dictates the data input and output from the database. In one example, input fields are generated that satisfy the customer standard prompting a user to enter all necessary data for the selected standard. The database can be used to create three-dimensional simulations or graphics models linked to text from the logistical management information so that they can be output together on a display device or paper document. Subsequent changes to either the logistical management information or the three-dimensional graphics model will result in an update to the data in common with the other thereby ensuring that all of the data relevant to a product is up to date, which reduces time and cost throughout the life cycle of the product. All the data required for a product can be entered into a single database.

These and other features of the present invention can be best understood from the following specification and drawings, the following of which is a brief description.

### BRIEF DESCRIPTION OF THE DRAWINGS

Figure 1 is a schematic of a computer having a database stored in a computer readable media.
Figure 2 is a schematic illustration of a database used to enter and manage both three-dimensional graphics models and logistical management information.
Figure 3 is a schematic illustration of the logistical management information general tasks.
Figure 4 is a schematic illustration of a database data entry screen associated with a customer required logistical management information.
Figure 5 is a schematic flow chart illustrating the process used in managing the three-dimensional and logistical management information.

### DETAILED DESCRIPTION OF THE PREFERRED EMBODIMENT

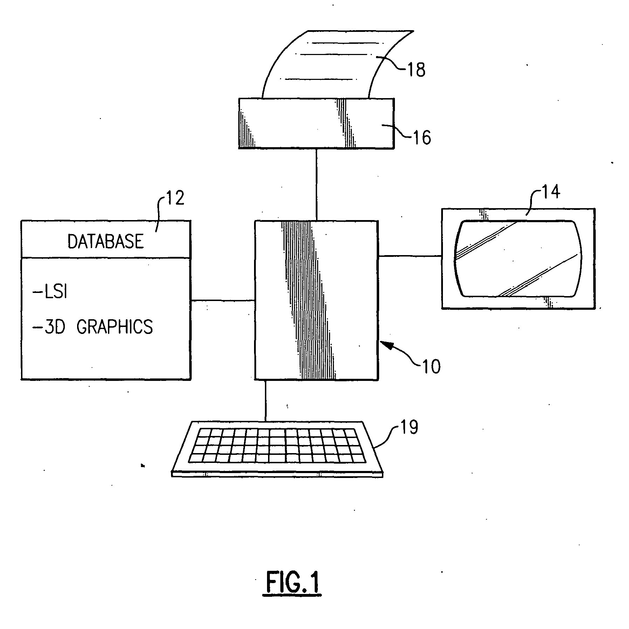

A computer 10 is depicted in a highly schematic fashion in Figure 1. The computer 10 includes a processor and communicates with a database 12 stored on a computer readable media. A display device 14 and peripheral, such as a printer 16 for printing documents 18, are associated with the computer 10. An input device 19 communicates with the computer 10 to input data into the database 12 that can be stored in the computer's memory. The arrangement is only intended to be exemplary and any number of modifications can be made, as is well known in the art. For example, the lines shown connecting the database 12, display device 14, printer 16 and input device 19 to the computer 10 are not intended to exclude any of those devices from being portable or configured in some other suitable manner.

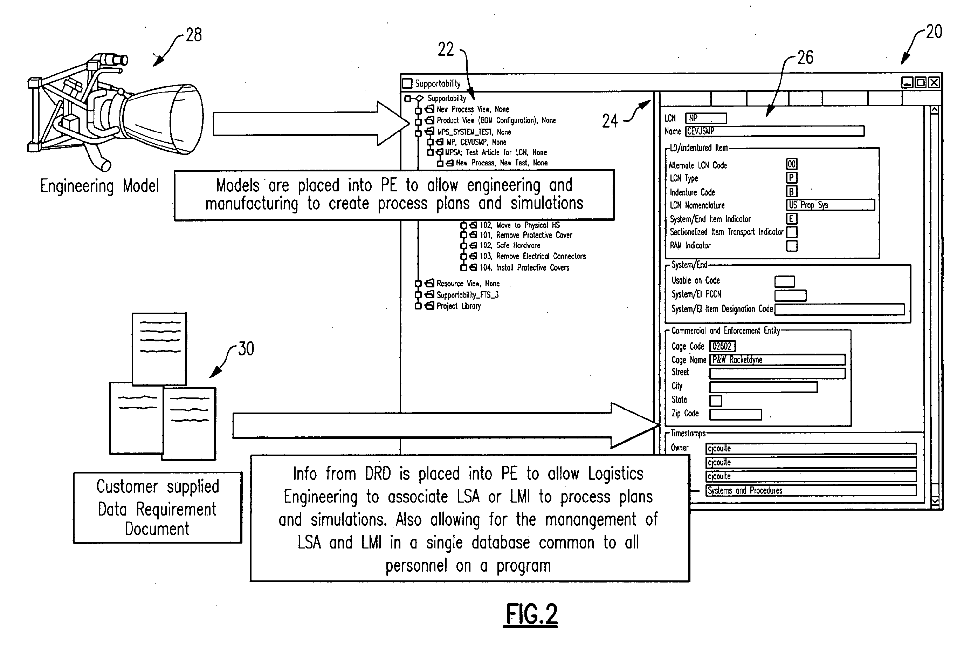

The database 12 includes a first set of data representative of three-dimensional graphics 28 and a second set of data representative of logistical management information (LSI 30), as shown in Figure 2. LSI can include such information as facility information for storing and servicing the product, product requirement information, and personnel information relating to product handling. LSI also typically includes information relating to assembly, disassembly and handling of the product. The database 12 may be part of a three-dimensional software program such as DELMIA available from Dessault Systems, which has the capability of utilizing both three dimensional graphics model data and LSI.

MIL-STD (1388-2A or 1388-2B) and MIL-PREF (49506), which are two types of government customer standards, set forth LSI required according to each standard. The government and other customers may require other customer standards, and the database can be configured to prompt a user for input of data satisfying a defined customer standard.

Figure 2 illustrates one user interface screen 20 depicting some example process options 22. Tabs 24 representing categories of information can be selected to generate input fields 26. The input fields 26 can relate to three-dimensional graphic data (represented by the three-dimensional graphics model 28) and/or LSI satisfying the customer standards 30. DELMIA can be customized to create any desired user interface screens, process options, tabs and input fields to comply with any desired customer standard.

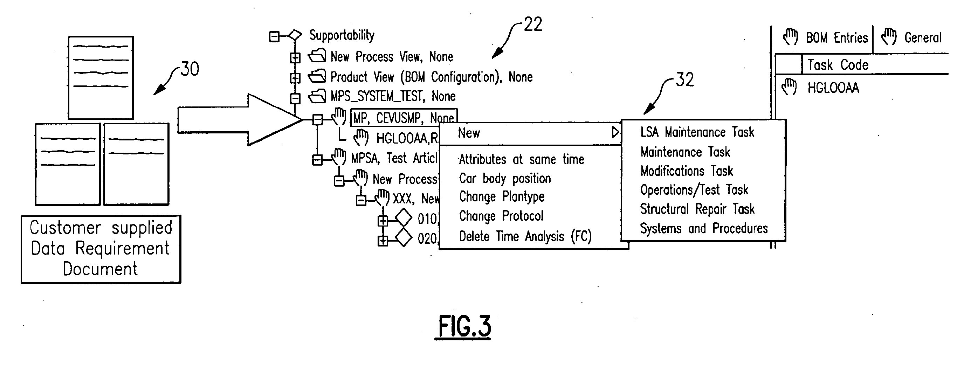

Figure 3 illustrates some common tasks 32 associated with an example customer standard. Specific tasks are required, and different information is contained in each task. Information common between tasks 32 can also be shared. The information that is necessary for each task 32 is driven by the customer requirements defined by the customer standard. Regardless of whether MIL-STD or MIL-PREF is the standard, the database is configured to handle all of the inputs. Fields will be used or left blank depending on the standard. Outputs are standardized based on either standard and/or customized.

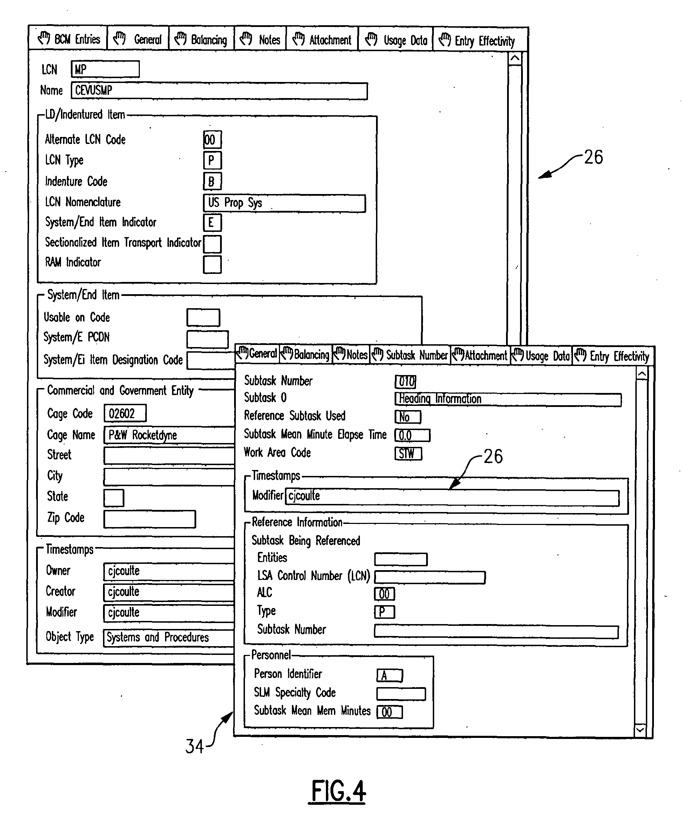

Forms 34 for subtasks relating to a particular task 32 can be used to obtain LSI using input fields 26, as illustrated in Figure 4. Once a specific task has been called out or created, the information will be placed into the data set through the form and attributes required. All requirements can be placed into the data set and made associative to the original engineering model. Maintaining facility, personnel and product requirements is a core functionality. Any LSI for a product is linked to the three-dimensional graphics model of the product so that changes to any datum is carried throughout the three-dimensional graphics model and LSI.

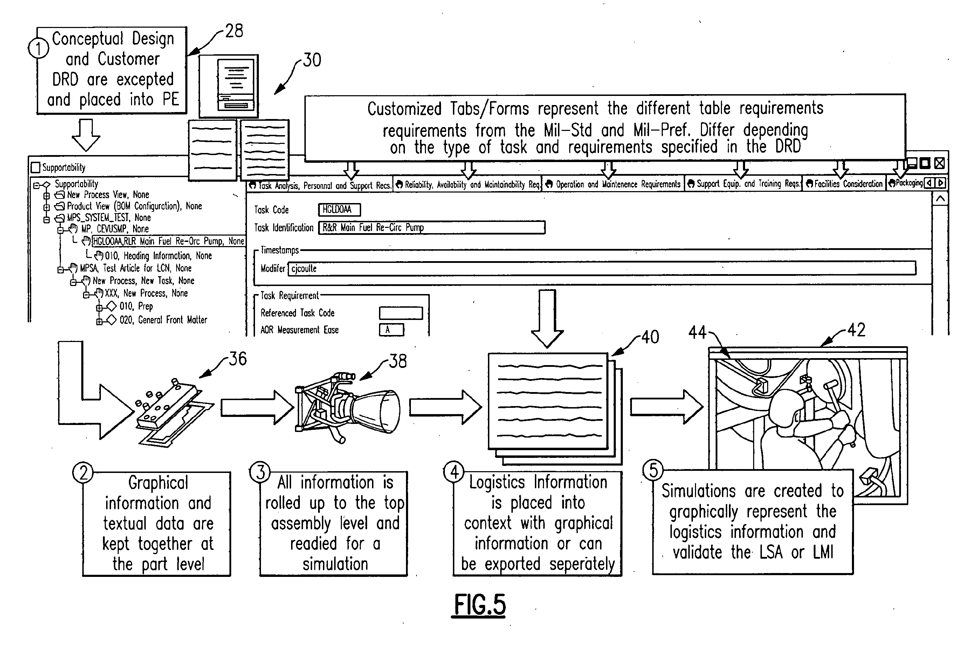

Figure 5 schematically illustrates the process flow according to one example of the database 12. Data relating to three-dimensional graphics models and LSI are input to a computer and stored in a database in a computer readable media. The three-dimensional graphics models and LSI share common data and are linked to one another using suitable software code at both the part level 36 and assembly level 38. For example, textual information representative of the LSI is associated with the part and/or assembly. The three-dimensional graphics model together with LSI text 40 can be output to a display device or printer or in a document format such as XML, DOC, XCL, PDF or HTML, for example. For example, three-dimensional graphic simulations 42 can be directly linked and annotated 44 with LSI text. The simulations can depict assembly, disassembly or handling processes, for example.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A method of managing data relating to a product comprising the steps of:
a) storing a first set of data (28) indicative of a three-dimensional graphics model of a product in a database in a computer readable media; and
b) storing a second set of data (30) in the database, the second set of data indicative of logistical management information associated with the product, wherein the first and second sets of data (28,30) overlap providing a common data set.

2. The method according to claim 1, creating process plans from the common data set.

3. The method according to claim 2, wherein the process plans include at least one of facility information for storing and servicing the product, product requirement information, and personnel information relating to product handling.

4. The method according to claim 3, comprising step c) creating a three-dimensional simulation from the common data that relate to the process plans.

5. The method according to claim 4, wherein the three-dimensional simulation relates to at least one of assembly, disassembly and handling of the product.

6. A method of gathering data relating to a product comprising the steps of:
a) selecting a customer standard relating to a product from multiple customer standards;
b) generating input fields satisfying the customer standard; and
c) inputting a first set of data (30) into the input fields and storing the first set of data in a database in a computer readable media, the database including a second set of data, the second set of data (28) relating to a three-dimensional graphics model of the product.

7. The method according to claim 6, wherein the customer standard includes at least one of MIL-PREF and MIL-STD.

8. The method according to claim 6, comprising linking the first set of data (30) with the second set of data (28).

9. The method according to claim 8, comprising outputting logistical management information represented by the first set of data (30) along with the three-dimensional graphics model.

10. A method of obtaining information relating to a customer standard comprising the steps of:
a) providing a common database in a computer media containing a three-dimensional graphics model and logistical management information relating to a product;
b) selecting a customer standard; and
c) outputting information from the common database complying with the customer standard.

11. The method according to claim 10, wherein step c) includes exporting logistical management information together with the three-dimensional graphics model.

12. The method according to claim 11, wherein the product includes a part, and the logistical management information relates to the part.

13. The method according to claim 12, wherein the product is an assembly including the part, and the logistical management information relates to the assembly.

14. The method according to claim 11, wherein the logistical management information and three-dimensional graphics model comprise a three-dimensional simulation relating to at least one of facility information for storing and servicing the product, product requirement information, and personnel information relating to product handling and at least one of assembly, disassembly and handling of the product.
